(19) Europäisches Patentamt
European Patent Office
Office européen des brevets

(11) EP 1 105 975 B1

# (12) FASCICULE DE BREVET EUROPEEN

(45) Date de publication et mention de la délivrance du brevet:
**29.10.2003 Bulletin 2003/44**

(21) Numéro de dépôt: **99939481.0**

(22) Date de dépôt: **19.08.1999**

(51) Int Cl.$^7$: **H04B 1/707**

(86) Numéro de dépôt international:
**PCT/FR99/02013**

(87) Numéro de publication internationale:
**WO 00/011799 (02.03.2000 Gazette 2000/09)**

## (54) RECEPTEUR EN RATEAU ITERATIF ET PROCEDE DE RECEPTION CORRESPONDANT

ITERATIVER RAKE-EMPFÄNGER UND ENTSPRECHENDES EMPFANGSVERFAHREN

ITERATIVE RAKE RECEIVER AND CORRESPONDING RECEPTION METHOD

(84) Etats contractants désignés:
**DE ES FI GB IT SE**

(30) Priorité: **20.08.1998 FR 9810578**

(43) Date de publication de la demande:
**13.06.2001 Bulletin 2001/24**

(73) Titulaire: **FRANCE TELECOM**
**75015 Paris (FR)**

(72) Inventeur: **SIALA, Mohamed**
**F-92140 Clamart (FR)**

(74) Mandataire: **Poulin, Gérard et al**
**BREVALEX**
**3, rue du Docteur Lancereaux**
**75008 Paris (FR)**

(56) Documents cités:
**EP-A- 0 676 874**
**EP-A- 0 748 074**
**EP-A- 0 756 391**
**WO-A-96/37054**
**WO-A-97/05709**
**GB-A- 2 311 702**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 1 105 975 B1

## Description

### Domaine technique

La présente invention a pour objet un récepteur en râteau (RAKE en terminologie anglosaxonne) itératif et un procédé de réception correspondant. Elle trouve une application en radiocommunications et plus particulièrement dans la technique dite d'accès multiple à répartitions par codes (AMRC), (en anglais CDMA pour "Code Division Multiple Access"). Elle peut s'appliquer au système défini par la norme IS'95 et dans les systèmes de troisième génération UMTS et IMT-2000.

### Etat de la technique antérieure

Dans la technique AMRC, les symboles d'information à transmettre ne viennent pas moduler directement une porteuse mais sont préalablement multipliés par des séquences (ou codes) pseudo-aléatoires, ce qui a pour effet d'étaler leur spectre. A la réception, le signal reçu est désétalé par un filtrage adapté à la séquence utilisée à l'émission (ou par corrélation) puis démodulé.
Cette technique permet à plusieurs utilisateurs d'emprunter un même canal de radiocommunications, à condition qu'on attribue à chacun une séquence particulière.
En général, le canal emprunté est multitrajets, en ce sens que l'onde radioélectrique se propage selon plusieurs chemins différents entre le lieu d'émission et le lieu de réception. Pour chaque symbole d'informations émis, le récepteur ne reçoit donc pas un seul signal mais plusieurs répliques plus ou moins retardées et plus ou moins altérées. Pour restituer de manière fiable l'information transmise, il faut prendre en compte le plus grand nombre possible de ces répliques et les recomposer dans le récepteur.
On a imaginé, pour ce faire, un récepteur particulier, dit en râteau (RAKE en terminologie anglosaxonne), en ce sens qu'il "ratisse" l'information à différents instants symbolisant les dents du râteau. Un tel récepteur sépare les signaux correspondant à des trajets différents, et comprend une pluralité de "dents" ou "branches" ou "doigts", qui traitent chacune un de ces signaux. Dans chaque dent, on désétale le signal et on le démodule. Il reste ensuite à recomposer l'ensemble des signaux dans un additionneur.
Un récepteur en râteau a été décrit initialement par R. PRICE et P.E. GREEN dans un article intitulé "A Communication Technique for Multipath Channels" publié dans la revue "Proceedings of the IRE", vol. 46, mars 1958, pp. 555-570.
On peut trouver également une description de ce récepteur dans l'ouvrage général de J.G. PROAKIS, intitulé "Digital Communications", 3ème édition, McGRAW-HILL, 1995, (troisième édition) 1989 (deuxième édition).
La figure 1 annexée illustre schématiquement un tel récepteur. Tel que représenté, ce récepteur comprend une entrée générale E, un filtre 10 de largeur adaptée à la bande d'étalement des signaux, L moyens $12_0$, ..., $12_\ell$, ..., $12_{L-1}$ permettant de restituer L signaux désétalés en fréquence correspondant à L trajets (ces moyens comprennent en général un filtre adapté à l'une des séquences pseudo-aléatoires utilisées à l'émission ou un corrélateur ainsi que des moyens pour chercher les pics de signal), L moyens $14_0$, ..., $14_\ell$, ..., $14_{L-1}$ pour estimer les caractéristiques des L trajets empruntés par les divers signaux, L moyens de démodulation $16_0$, ..., $16_\ell$, ..., $16_{L-1}$ combinant les signaux désétalés et les estimations de trajets, un additionneur 18 ajoutant les L contributions délivrées par les L démodulateurs, et enfin, un circuit de décision 20, qui délivre sur une sortie générale S les symboles transmis ou de référence qui permettent de tester la communication.
WO 97 057 09 A décrit un récepteur conforme au préambule de la revendication 1.
Avec une demande soutenue de services nécessitant des débits de plus en plus forts, la bande d'étalement en fréquence des systèmes AMRC est sans arrêt revue à la hausse. Cette augmentation de la bande s'accompagne d'un accroissement continu du nombre de trajets reçus au niveau du récepteur. Cet accroissement du nombre de trajets conduit, pour une puissance reçue donnée, à une réduction de la puissance reçue par trajet et donc à une diminution de la qualité de l'estimation du canal global. En conséquence, une combinaison constructive des contributions de ces trajets au niveau du récepteur est rarement garantie et peut conduire à une perte importante en qualité de transmission.
Comme les systèmes AMRC sont, par nature, limités par des interférences d'accès multiple, on ne peut compenser cette perte de performances par une augmentation de la puissance. Par ailleurs, l'augmentation du nombre des symboles pilotes est une solution dommageable pour la capacité du système.
L'invention a justement pour but de remédier à cet inconvénient.

### Exposé de l'invention

La présente invention a pour but principal d'accroître les performances des systèmes AMRC en améliorant

la qualité de la réception pour une puissance émise donnée et donc avec un niveau d'interférences d'accès multiple inchangé. Cette amélioration de la qualité permet, entre autres, d'augmenter la capacité et la couverture du système AMRC. Cette amélioration est obtenue par une optimisation du fonctionnement du récepteur dans le cas classique des évanouissements lents, mais également dans le cas plus difficile des évanouissements très rapides.

Un autre but de l'invention est de faciliter la réalisation des terminaux en les rendant beaucoup moins sensibles aux imprécisions de l'oscillateur local utilisé pour transposer le signal reçu en bande de base.

Les systèmes AMRC introduisent le concept de période de contrôle de puissance (PCP en abrégé). La puissance du signal émis par l'émetteur reste constante durant chacune de ces périodes mais peut varier d'une période de contrôle de puissance à la suivante afin de contrecarrer les évanouissements lents (dus à la distance et aux effets de masque), ainsi que les évanouissements rapides dus aux effets des trajets multiples lorsque le terminal se déplace lentement. Par ailleurs, il est fait usage, en plus des symboles véhiculant l'information, de symboles de contrôle. L'invention permet de réduire, à qualité de réception constante, le nombre relatif et/ou la puissance de ces symboles de contrôle. Cet objectif est atteint par la prise en compte de manière optimale des symboles de contrôle d'un nombre arbitraire de périodes de contrôle de puissance consécutives dans l'estimation du canal. Il est également atteint par la prise en compte, dans l'estimation optimale de canal, des symboles de contrôle inclus éventuellement dans les canaux pilotes de certains systèmes AMRC, en l'absence d'antennes adaptatives. Il est également atteint par la prise en compte, dans l'estimation, des éventuels symboles de contrôle affectés à d'autres utilisateurs dans la liaison descendante, toujours en l'absence d'antennes adaptatives. Il est enfin atteint par l'optimalité de la prise en compte, dans l'estimation de ce canal (d'une partie ou de la totalité), des symboles de données de ces périodes de contrôle de puissance qui sont bien sûr plus nombreux et souvent plus énergétiques que les symboles de contrôle. La réduction du nombre et/ou de la puissance des symboles de contrôle permet respectivement de consolider le codage des données utiles et d'augmenter la part de la puissance transmise allouée à ces données.

L'invention permet également de tenir compte, dans l'estimation optimale du canal, aussi bien des symboles de contrôle multiplexés en temps que des symboles de contrôle multiplexés sur les composantes en phase et/ou quadrature du signal modulé.

L'invention permet l'utilisation de tous les symboles de la période de contrôle de puissance. Elle permet ainsi de suivre et de corriger les décalages de fréquence de l'oscillateur local, même dans le cas où les symboles de contrôle sont regroupés.

Selon l'invention, on effectue un traitement bloc, par bloc à chaque fois que le signal reçu correspondant à un nombre donné de périodes de contrôle de puissance est disponible. A l'instar d'un récepteur en râteau classique, il commence toujours par un désétalement des signaux correspondant aux trajets significatifs retenus pour la combinaison finale. Il effectue ensuite une estimation grossière du canal multi-trajets en se servant uniquement des symboles de contrôle associés au bloc reçu. Cette estimation permet de caractériser, au niveau de chaque symbole du bloc, symbole par symbole, l'évolution de la phase et de l'amplitude de chacun des trajets durant le bloc à traiter. Le récepteur de l'invention démodule et combine alors les contributions des trajets estimés et délivre un échantillon (ou sortie pondérée) pour chaque symbole de donnée contenu dans le bloc.

Dans le cas d'un récepteur en râteau classique, ces sorties pondérées sont directement exploitées pour détecter et décoder les symboles de données transmis. Ces sorties possèdent une certaine fiabilité par rapport aux valeurs prises par les symboles de données envoyés durant un bloc. Dans le cas du récepteur de l'invention, elles peuvent être exploitées, en plus des symboles de contrôle, pour fournir une estimation améliorée de chaque trajet reçu. Cette estimation améliorée du canal multi-trajets peut être optimisée en tenant éventuellement compte de la structure codée des symboles de données. La prise en compte du codage correcteur conduit au niveau du récepteur à des sorties pondérées de meilleure qualité.

Les sorties pondérées obtenues à la fin d'une itération donnée peuvent être utilisées de nouveau, conjointement avec les symboles de contrôle, pour apporter une amélioration supplémentaire à l'estimation du canal. Cette estimation améliorée permet à son tour d'augmenter la qualité des sorties pondérées générées par le récepteur. La sortie du récepteur est donc rebouclée sur les moyens d'estimation.

L'optimalité du récepteur selon l'invention est liée à celle de l'estimation du canal multi-trajets. Cette optimalité repose d'abord sur l'utilisation d'un algorithme itératif de type Estimation-Maximisation (en abrégé EM) pour trouver la réalisation de canal la plus vraisemblable conditionnellement au bloc reçu. Cet algorithme est décrit par exemple dans l'article de A.P. DEMPSTER, N.M. LAIRD et D.B. RUBIN intitulé "Maximum Likelihood from Incomplete Data via the EM Algorithm", publié dans la revue J. Roy.Stat.Soc., Ser. 39, 1977.

L'optimalité de l'estimation du canal repose également sur la décomposition de chaque trajet reçu selon un algorithme d'expansion dit de KARHUNEN-LOEVE. Cette décomposition permet une caractérisation souple des variations temporelles des trajets dues à l'effet Doppler et s'intègre facilement dans l'algorithme EM lui-même. L'algorithme de KARHUNEN-LOEVE est décrit par exemple dans l'ouvrage de J.G. PROAKIS déjà cité, version 1989, pages 340-344.

De façon plus précise, la présente invention a pour objet un récepteur de signaux de radiocommunications

AMRC, ces signaux ayant été obtenus à partir de symboles à spectre étalé par des séquences pseudoaléatoires, ces signaux s'étant ensuite propagés suivant une pluralité de trajets, ce récepteur comprenant :

- des moyens pour restituer, pour chaque symbole, L signaux désétalés correspondant à L trajets différents,
- des moyens pour calculer L estimations des L trajets,
- des moyens de démodulation pour traiter chacun des L signaux désétalés à l'aide des L estimations correspondantes pour obtenir L contributions des trajets,
- un additionneur pour former la somme de ces L contributions et pour délivrer une estimation du symbole reçu,
- un circuit de décision quant au symbole reçu à partir de la valeur de l'estimation délivrée par l'additionneur,

ce récepteur étant caractérisé en ce que :

a) il traite des blocs de N symboles, chaque bloc comprenant des symboles de données et des symboles de contrôle, chaque symbole étant repéré par le rang k qu'il occupe dans le bloc, k allant de 0 à N-1,
b)pour chaque trajet, repéré par un indice $\ell$, $\ell$ allant de 0 à L-1, et pour chaque bloc, le récepteur considère un vecteur $C_\ell$ à N composantes qui caractérise le trajet durant ce bloc,
c)le récepteur comprend des moyens pour définir une base de vecteurs $B_k$, ces vecteurs étant les N vecteurs propres de la matrice

$$E\left[C_\ell C_\ell^{*T}\right],$$

chaque vecteur $C_\ell$ étant décomposé dans cette base, les coefficients de la décomposition, notés $G_{\ell k}$ constituant des variables aléatoires gaussiennes indépendantes,
d)les coefficients $G_{\ell k}$ définissent, pour chaque trajet $\ell$, un vecteur $G_\ell$ à N composantes, les moyens d'estimation étant aptes à estimer chaque vecteur $G_\ell$ par un processus itératif fondé sur un algorithme d'estimation-maximisation EM fondé sur un critère de probabilité a posteriori maximale.

Dans un mode particulier de réalisation, la sortie de l'additionneur est rebouclée sur les moyens d'estimation, les moyens d'estimation étant initialement mis en oeuvre en prenant en compte les symboles de contrôle contenus dans le bloc et supposés connus, ce qui permet d'obtenir en sortie de l'additionneur une première estimation pour les symboles de données contenus dans le bloc, lesdits moyens d'estimation prenant en compte, ensuite, les symboles estimés présents en sortie de l'additionneur et ainsi de suite, les moyens d'estimation délivrant finalement, après une dernière itération, la valeur optimale des $G_\ell$ ($\ell$=0,1, ..., L-1).

La présente invention a également pour objet un procédé de réception de signaux de radiocommunications de type AMRC, ces signaux ayant été obtenus à partir de symboles à spectre étalé par des séquences pseudoaléatoires, ces signaux s'étant ensuite propagés suivant une pluralité de trajets, ce procédé de réception comprenant les opérations suivantes :

- pour chaque symbole, on restitue L signaux désétalés correspondant à L trajets différents,
- on calcule L estimations des L trajets,
- on démodule chacun des L signaux désétalés à l'aide des L estimations correspondantes pour obtenir les L contributions des trajets,
- on forme la somme de ces L contributions, ce qui donne une estimation du symbole reçu,
- on prend une décision quant au symbole reçu à partir de la valeur de l'estimation obtenue,

ce procédé étant caractérisé en ce que :

a)on traite des blocs de N symboles, chaque bloc comprenant des symboles de données et des symboles de contrôle, chaque symbole étant repéré par le rang k qu'il occupe dans le bloc, k allant de 0 à N-1,
b)pour chaque trajet, repéré par un indice $\ell$, $\ell$ allant de 0 à L-1, et pour chaque bloc, on considère un vecteur $C_\ell$ à N composantes qui caractérise le trajet durant ce bloc,
c)on considère la matrice

$$E\left[C_\ell C_\ell^{*T}\right]$$

qui possède N vecteurs propres notés $B_k$ et l'on prend ces vecteurs propres $B_k$ comme base, on décompose chaque vecteur $C_\ell$ dans cette base, les coefficients de la décomposition, notés $G_{\ell k}$, constituant des variables aléatoires gaussiennes indépendantes,

d)les coefficients $G_{\ell k}$ définissent, pour chaque trajet $\ell$, un vecteur $G_\ell$ à N composantes et l'on estime chaque vecteur $G_\ell$ par un processus itératif fondé sur un algorithme d'estimation-maximisation (EM) fondé sur un critère de probabilité a posteriori maximale.

Dans un mode de mise en oeuvre particulier, le processus itératif est initialement mis en oeuvre en prenant en compte les symboles de contrôle contenus dans le bloc et supposés connus, ce qui permet d'obtenir une première estimation pour les symboles de données contenus dans le bloc, ledit processus itératif prenant en compte, ensuite, tous les symboles du bloc conformément à cette première estimation, ce qui permet d'obtenir une deuxième estimation des symboles du bloc, et ainsi de suite, jusqu'à l'obtention d'une estimation satisfaisante pour les $G_\ell$, que l'on utilise pour la démodulation.

## Brève description des dessins

- la figure 1, déjà décrite, montre un récepteur en râteau connu ;
- la figure 2 illustre la structure générale du récepteur en râteau itératif selon l'invention ;
- la figure 3 montre le bloc d'estimation et d'optimisation selon le critère de probabilité a posteriori maximale ;
- la figure 4 permet de comparer les performances d'un récepteur selon l'invention avec deux récepteurs en râteau classiques en donnant le taux d'erreur binaire en fonction du rapport $\bar{E}/I_0$, où $I_0$ est la puissance spectrale due au bruit thermique et aux interférences dues aux accès multiples et où $\bar{E}$ est l'énergie moyenne par symbole reçu ;
- la figure 5 permet de comparer les performances du récepteur de l'invention avec deux récepteurs classiques en donnant le taux d'erreur binaire en fonction de la position des symboles de données dans une période de contrôle de puissance pour $\bar{E}/I_0$ égal à 10 dB.

## Description de modes particuliers de réalisation

Par souci de simplification et de notation, les développements mathématiques qui suivent, comme les figures, se rapportent au cas où les symboles sont multiplexés uniquement dans le temps. Le cas où les symboles sont multiplexés à la fois dans le temps et par code sur les composantes en quadrature se traite de la même façon.

Le récepteur de l'invention recherche une représentation du canal multitrajets selon un critère connu dit de probabilité a posteriori maximale, (MAP en abrégé, pour "maximum a posteriori"). Cette estimation nécessite la connaissance des symboles émis, ou tout au moins leur probabilité. Dans un mode particulier de réalisation, le récepteur peut utiliser les estimations présentes en sortie de l'additionneur. Dans ce cas, la sortie est donc rebouclée sur les divers estimateurs comme l'illustre la figure 2. Sur cette figure, on voit que la sortie de l'additionneur 18, qui délivre un signal noté $\Lambda_k$ (où k désigne le rang du symbole traité, ce rang allant de 0 à N-1 comme il sera expliqué plus loin), est rebouclée sur les estimateurs $14_0$, ..., $14_\ell$, ..., $14_{L-1}$. Mais ce rebouclage n'apparaît pas de manière explicite comme on le comprendra plus loin.

La détermination des propriétés du canal multi-trajets utilise les probabilités a posteriori de certaines grandeurs, compte tenu du signal $R_{\ell k}(t)$ délivré par chaque circuit de désétalement. Pour effectuer ce calcul, on décompose le signal en composantes, en veillant à ce que celles-ci ne soient pas corrélées. Pour ce faire, on met en oeuvre l'algorithme de décomposition dit de KARHUNEN-LOEVE dont on va rappeler brièvement le principe.

Une fonction du temps z(t) aléatoire, de valeur moyenne nulle, présente une fonction de corrélation notée $\phi(t,\tau)$ égale à $\frac{1}{2}E[z(t).z^*(\tau)]$ où E est l'espérance mathématique. La fonction z(t) peut être développée en série sous la forme :

$$z(t)=\sum_{n=1}^{\infty} z_n f_n(t)$$

où les $z_n$ sont les coefficients du développement et les $f_n(t)$ sont des fonctions orthonormées sur un certain intervalle O, T.

Chaque coefficient $z_n$ peut être obtenu à partir de la fonction z(t) et des fonctions propres $f_n(t)$ par la relation :

$$z_n = \int_0^T z(t)\, f^*_n(t)\, dt$$

On démontre que les fonctions orthonormées $f_n(t)$ sont les fonctions propres de l'équation :

$$\int_0^T \phi(t,\tau)\, f_n(\tau) d\tau = \lambda_n f_n(t)$$

où les $\lambda_m$ sont les valeurs propres.

Si le signal délivré par un circuit de désétalement (filtre adapté ou corrélateur) est noté R(t), on a :

$$R(t) = C(t)A(t) + N(t)$$

où C(t) est une fonction qui caractérise le trajet emprunté par l'onde, A(t) est l'information émise et N(t) un bruit additif gaussien. Pour estimer chaque trajet, on va décomposer la fonction C(t) qui le caractérise selon l'algorithme de KARHUNEN-LOEVE. En réalité, les radiocommunications de type AMRC ne mettent pas en oeuvre des fonctions continues du temps mais des grandeurs numériques, autrement dit des échantillons. Le signal en sortie du circuit de désétalement de la dent d'ordre $\ell$ du râteau se met sous la forme :

$$R_{\ell k} = C_{\ell k} A_k + N_{\ell k}$$

où k est le rang du symbole, supposé aller de 0 à N-1 si l'on traite un bloc de N symboles. Pour un trajet donné, repéré par l'indice $\ell$, les N composantes $C_{\ell k}$ constituent les N composantes d'un vecteur $C_\ell$. C'est ce vecteur qu'on décomposera selon l'algorithme de KARHUNEN-LOEVE qui, dans ce cas, met en jeu des sommations discrètes au lieu d'intégrales. Plutôt que de "fonctions" propres, on parlera donc de "vecteurs" propres mais l'esprit de la décomposition reste le même.

Ces généralités ayant été rappelées, le récepteur et le procédé de l'invention peuvent être décrits en détails de la manière suivante, dans le cas où l'on se restreint à une seule période de contrôle de puissance.

Chaque palier de puissance, correspondant à une période de contrôle de puissance est composé de $N_D$ symboles de données et de $N_C$ symboles de contrôle, tous modulés en phase (MDP2, MDP4, MDP8, ...). Dans ce qui suit, on note N le nombre total de ces symboles ($N=N_D+N_C$), $a_0, a_1, ..., a_{N_D-1}$ les symboles de données et $a_{N_D}, a_{N_D+1}, ..., a_{N-1}$ les symboles de contrôle.

Ces deux catégories de symboles peuvent être étalés avec des facteurs d'étalement différents grâce à des séquences pseudo-aléatoires finies. De plus, elles peuvent être soit multiplexées séparément sur les composantes en phase et en quadrature du signal modulé, soit ensemble dans le temps. Dans la suite, on notera $p_i$ la position temporelle relative de chacun de ces symboles par rapport au début de la période de contrôle de puissance correspondante.

Généralement, les symboles de contrôle sont composés, d'une part, de Np symboles pilotes $a_{N_D}, a_{N_D+1}, ..., a_{N_D+N_P-1}$ connus du récepteur et de $N_C$-$N_P$ symboles $a_{N_D+N_P}, a_{N_D+N_P+1}, ..., a_{N-1}$ dédiés au contrôle de puissance sur la voie réciproque et à l'indication du format des données reçues.

Durant une période de contrôle de puissance donnée, l'énergie émise allouée au symbole $a_i$ sera notée $E_i$. Habituellement, cette énergie est commune aux symboles de chaque catégorie, mais elle peut différer d'une catégorie à l'autre. Dans ce cas, on notera respectivement par $E_D$ et $E_C$ les énergies attribuées aux symboles de données et de contrôle.

Le canal multitrajet vu par les signaux AMRC émis est composé de plusieurs trajets présentant ou pouvant présenter des variations temporelles dues à l'effet Doppler. Chaque trajet est caractérisé par une puissance moyenne et un spectre de puissance Doppler (SPD) donnés qui dépendent de l'environnement et de la vitesse du mobile. De plus, les évanouissements subis par chaque trajet peuvent être aussi bien de type Rayleigh que de type Rice.

Généralement, les spectres de puissance Doppler avec évanouissement de Rayleigh sont soit de type classique, soit de type plat. Les spectres de puissance Doppler classiques (respectivement, plats) sont surtout rencontrés dans les environnements extérieurs (respectivement, intérieurs) aux bâtiments.

On note $B_D$ l'étalement Doppler du canal et $J_0(.)$ la fonction de Bessel de première espèce d'ordre 0. La fonction d'autocorrélation d'un trajet de puissance moyenne $\phi(0)$ est alors donnée par :

$$\phi(\tau) = \phi(0)\, J_0(\pi B_D \tau),$$

dans le cas d'un SPD classique et par

$$\phi(\tau) = \phi(0) \sin(\pi B_D \tau) / \pi B_D \tau,$$

dans le cas d'un SDP (spectre de puissance Doppler) plat. La puissance moyenne $\phi(0)$ varie d'un trajet à l'autre et caractérise donc le profil de l'intensité des trajets.

Comme rappelé plus haut, un récepteur en râteau est composé de L dents qui permettent de poursuivre les L trajets les plus puissants et assure la combinaison constructive des contributions de ces L trajets. Le nombre de trajets pris en compte par un récepteur en râteau est généralement inférieur au nombre réel des trajets effectivement reçus. Ce nombre dépend de l'environnement (extérieur ou intérieur) et du facteur d'étalement AMRC. Des valeurs typiques de 2 à 3 dans les environnements intérieurs et de 4 à 8 dans les environnements extérieurs sont souvent utilisées.

Soit $R_{\ell k}$ le signal à la sortie du corrélateur de la $\ell^{ième}$ dent correspondant au $k^{ième}$ symbole $a_k$ transmis durant une période de contrôle de puissance quelconque. Ce signal peut se mettre sous la forme :

$$R_{\ell k} = c_{\ell k} a_k + N_{\ell k}$$

où $c_{\ell k}$ est le facteur de gain du $\ell^{ième}$ trajet du récepteur vu par le symbole $a_k$ et $N_{\ell k}$ est un bruit complexe qui inclut aussi bien le bruit thermique que l'interférence causée par l'accès multiple des autres mobiles. Pour simplifier l'analyse et la conception du récepteur ce bruit est supposé gaussien et décorrélé et sa variance est notée $I_0$.

Les facteurs de gain d'un trajet donné sont également supposés indépendants de ceux des autres. La raison en est que deux signaux parvenant au récepteur avec des retards différents ont une grande chance de ne pas emprunter les mêmes chemins et de ne pas rencontrer les mêmes obstacles. Néanmoins, les facteurs de gain d'un même trajet sont généralement corrélés entre eux. Si E[.] et $\phi_\ell(.)$ dénotent respectivement l'opérateur espérance mathématique et la fonction d'autocorrélation continu du $\ell^{ième}$ trajet, alors la fonction d'autocorrélation discrète correspondant à ce trajet est donnée par :

$$E\left[C_{\ell i} C^{*}_{\ell j}\right] = \phi_\ell(p_i - p_j)$$

où les $p_i$ et les $p_j$ repèrent la position temporelle des symboles par rapport au débit de la période de contrôle de puissance.

Le récepteur a, en général, une idée vague aussi bien de la valeur de l'étalement Doppler $B_D$ que de la forme du spectre de puissance Doppler. Par conséquent, il adopte la représentation de canal multi-trajets la moins prévisible avec un spectre de puissance Doppler plat dont l'étalement Doppler est supérieur ou égal à l'étalement réel. Par souci de simplification, cette borne supérieure de l'étalement sera également notée $B_D$. Elle peut être fixée de manière définitive au niveau du récepteur en fonction de sa vitesse maximale autorisée ou atteinte. Elle peut également être estimée de manière adaptative en utilisant par exemple les symboles et/ou le canal pilote.

Durant chaque période de contrôle de puissance, le récepteur a besoin d'une estimation aussi précise que possible des facteurs de gain $C_{\ell k}$ correspondant aux symboles de données, de contrôle de puissance et de format des données reçues. A cette fin, le récepteur de l'invention est capable de tenir compte de la corrélation temporelle des facteurs de gain de tous les trajets combinés par le récepteur. Il est également capable de prendre en compte une partie ou la totalité de la structure codée des symboles de données et de contrôle inconnus du récepteur pour améliorer cette estimation. Il a enfin la possibilité de prendre en compte une partie ou la totalité des symboles de données et de contrôle de période de contrôle de puissance voisines pour optimiser son estimation au niveau d'une période de contrôle de puissance donnée.

Pour simplifier, on considérera le cas d'un estimateur de canal multitrajets utilisant exclusivement les symboles reçus durant une période de contrôle de puissance pour estimer la réalisation de canal correspondante. On note $(.)^T$ l'opérateur transposition et on introduit le vecteur :

$$R_\ell = (R_{\ell 0}, R_{\ell 1}, \ldots, R_{\ell ,N-1})^T$$

Ce vecteur a pour composantes les N échantillons reçus durant la période de contrôle de puissance à traiter et correspondant au $\ell^{ième}$ trajet retenu par le récepteur. L'estimation du canal multitrajets durant cette période de

contrôle de puissance repose entièrement sur ces L vecteurs $R_0, R_1,..., R_{L-1}$ d'échantillons reçus.

On note |.| l'opérateur module. On rappelle que l'amplitude $|a_k|$ de $a_k$ qui est égale à $\sqrt{E_k}$, dépend non seulement de la période de contrôle de puissance mais aussi de l'indice du symbole émis. Dans la pratique, cette amplitude est la même pour chaque catégorie de symboles.

Pour s'affranchir de cette dépendance vis-à-vis de l'amplitude, on introduit le vecteur de symboles transmis normalisés :

$$A = (A_0, A_1, ..., A_{N-1})^T$$

avec $A_k=a_k/|a_k|$. La $k^{ième}$ composante du $\ell^{ième}$ vecteur d'échantillons reçus peut donc se mettre sous la forme :

$$R_{\ell k} = C_{\ell k}A_k + N_{\ell k}$$

où $C_{\ell k}$ est la $k^{ième}$ composante du vecteur

$$C_\ell = (|a_0|c_{\ell 0},|a_\ell|c_{\ell 1},...,|a_{N-1}|C_{\ell,N-1})^T$$

de facteurs de gain normalisés correspondant au $\ell^{ième}$ trajet. C'est ce vecteur qu'il s'agit de représenter.

Cette représentation, fondée sur l'algorithme de décomposition de KARHUNEN-LOEVE, consiste à exprimer chacun des L vecteurs normalisés $C_\ell$, $\ell$=0, 1, ..., L-1 sous la forme

$$C_\ell = \sum_{k=0}^{N-1} G_{\ell k} B_k ,$$

où les $B_k$ sont les N vecteurs propres normalisés de matrice de covariance

$$F_\ell = E\left[C_\ell C_\ell^{*T}\right]$$

de $C_\ell$, et les coefficients $G_{\ell k}$ sont des variables aléatoires gaussiennes indépendantes de moyenne nulle et de variance égale aux valeurs propres de la matrice $F_\ell$, on rappelle que l'indice k va de 0 à N-1).

On suppose que les formes des spectres de puissance Doppler des trajets sont identiques et donc que les vecteurs propres $B_k$ correspondants sont également identiques. Dans le cas où les caractéristiques exactes du canal multi-trajets sont connues, la matrice $F_\ell$ a pour $(i, j)^{ième}$ entrée :

$$F_{\ell ij} = \phi_\ell(p_i-p_j)\sqrt{E_iE_j}.$$

En pratique, ni la forme du spectre de puissance Doppler et l'étalement Doppler correspondant, ni les puissances avec lesquelles sont émises les périodes de contrôle de puissance ne sont connues avec précision. Le récepteur peut alors adopter le SPD plat de largeur $B_D$ représentant une borne supérieure de l'étalement Doppler réel. De plus, il peut supposer que la puissance moyenne reçue ne varie pas beaucoup d'une période de contrôle de puissance à l'autre. Dans ce cas plus réaliste, la $(i,j)^{ième}$ entrée de la matrice $F_\ell$, donnée par

$$F_{\ell ij} = \phi_\ell(0)\sqrt{E_iE_j}\sin(\pi B_D(p_i-p_j))/\pi B_D(p_i-p_j)$$

ne dépend plus que de la borne supérieure de l'étalement Doppler adoptée.

En pratique également, le récepteur peut disposer d'une banque de vecteurs propres pour différentes valeurs typiques de la borne supérieure de l'étalement Doppler pour pouvoir s'adapter au mieux à la vitesse du terminal.

L'estimateur de canal, d'après l'invention, réalise une estimation itérative du canal multitrajets avec évanouissements selon le critère de MAP. Il peut prendre en compte, dans son estimation, aussi bien les caractéristiques de

la représentation adéquate du canal que les valeurs des symboles pilotes et la structure codée des symboles inconnus (symboles de données inclus).

L'estimation au MAP des $\hat{G}_\ell$, $\ell$ prenant toutes les valeurs de 0 à L-1, d'une réalisation $G_\ell$ du canal multitrajets avec évanouissements, est la valeur

$$\left\{\hat{G}_\ell\right\}_{\ell=0}^{L-1} = \operatorname{argmax} P\left(\{G\}_\ell^{L-1}, \{R\}_\ell^{L-1}\right)$$

qui maximise la densité de probabilité a posteriori

$$p\left(\left\{G_\ell\right\}_{\ell=0}^{L-1}, \left\{R_\ell\right\}_{\ell=0}^{L-1}\right).$$

Conformément à l'invention, et en utilisant l'algorithme EM, on peut obtenir itérativement une solution aussi proche qu'on le désire de la solution exacte.

Dans le cas général, la densité de probabilité a posteriori

$$p\left(\left\{G_\ell\right\}_{\ell=0}^{L-1}, \left\{R_\ell\right\}_{\ell=0}^{L-1}\right)$$

à maximiser possède plusieurs maxima globaux qui conduisent à une ambiguïté dans l'estimation du canal selon le critère MAP. Cette ambiguïté peut être levée grâce à l'utilisation des symboles pilotes connus du récepteur. Cependant, ceci se révèle souvent insuffisant, car cette densité de probabilité possède également des maxima locaux qui peuvent être atteints par l'algorithme EM à la place du seul maximum global. Pour résoudre ce problème, on peut se baser sur les symboles pilotes pour déterminer convenablement les conditions initiales $\hat{G}_\ell^{(0)}$, $\ell$=0,1,..., L-1.

L'algorithme EM ré-estime, par induction, les vecteurs $G_\ell$ de manière à garantir une croissance monotone de la densité de probabilité conditionnelle a posteriori

$$p\left(\left\{G_\ell\right\}_{\ell=0}^{L-1}, \left\{R_\ell\right\}_{\ell=0}^{L-1}\right).$$

Etant donné les vecteurs reçus $R_\ell$, l'algorithme EM commence par un calcul des conditions initiales $G_\ell^{(0)}$ des vecteurs $G_\ell$ à partir des échantillons reçus correspondant aux symboles pilotes.

On note $S_k$ l'ensemble des valeurs possibles prises par le $k^{ième}$ symbole d'une période de contrôle de puissance, par S l'ensemble des indices des symboles pilotes d'une période de contrôle de puissance et $D_k$ la valeur prise par le symbole pilote $A_k$ d'indice compris dans S (k∈S). A ce stade de l'initialisation de l'algorithme EM, le récepteur n'a aucune idée des valeurs des symboles de données et utilise donc une densité de probabilité conditionnelle

$$p\left(A_k \middle| \left\{R_\ell\right\}_0^{L-1}, \left\{G_\ell^{-1}\right\}_{\ell=0}^{L-1}\right)$$

uniforme pour les $A_k$ qui ne sont pas des symboles pilotes. Si la constellation de la modulation est à symétrie centrale (MDP2, MDP4, MDP8, ...) alors la $n^{ième}$ composante de la condition initiale du $\ell^{ième}$ trajet $G_\ell^{(0)}$ peut être choisie égale à

$$G_{\ell n}^{(0)} = w_{\ell n} \sum_{k \in S} D_k^* R_{\ell k} B_{nk}$$

où $w_{\ell n}$ est un facteur de pondération donné par

$$w_{\ell n} = \frac{1}{1 + I_0 / \Gamma_{\ell n}}$$

Ce facteur dépend à la fois de $\Gamma_{\ell n}$, $n^{ième}$ valeur propre de la matrice $F_\ell$ (qui tient aussi bien de la puissance moyenne $\phi_\ell(0)$ du $\ell^{ième}$ trajet que de l'étalement Doppler $B_D$ et de l'énergie émise associée aux symboles de données $E_D$ et de contrôle $E_C$) et de la variance du bruit $I_0$ incluant le bruit thermique et l'interférence par accès multiple.

En se basant toujours sur tous les vecteurs reçus $R_\ell$, l'algorithme EM conduit ensuite un calcul itératif de la ré-estimation $G_{(d+1)}^{\ell}$ à partir de l'estimation $G_\ell^d$ en se servant de l'expression :

$$G_{\ell n}^{(d+1)} = w_{\ell n}\left(\sum_{\substack{k=0\\ k\notin S}}^{N-1}\left[\sum_{A\in S_k} A^* P\left(A \middle| \{R_{\ell'}\}_{\ell'=0}^{L-1}, \{G_{\ell'}^{(d)}\}_{\ell'=0}^{L-1}\right)\right] R_{\ell k} B_{nk} + \sum_{k\in S} D_k^* R_{\ell k} B_{nk}\right)$$

reliant la $n^{ième}$ composante de la $(d+1)^{ième}$ ré-estimation du $\ell^{ième}$ vecteur de la représentation adéquate du canal $G_\ell^{(d)}$.

L'estimation itérative selon l'invention de la représentation adéquate $G_\ell$ peut être accomplie un nombre limité D de fois de telle manière que l'estimation globale $G_\ell^{(D)}$ obtenue garantisse une dégradation imperceptible des performances du récepteur par rapport à la solution optimale $G_\ell$.

Ces opérations sont illustrées sur la figure 3 où l'on voit l'estimateur de rang $\ell$, soit $14_\ell$, avec des moyens 30 définissant la base des vecteurs $B_k$ et des moyens 32 calculant les coefficients de pondération. L'estimateur $14_\ell$ met en oeuvre une première estimation représentée symboliquement par le bloc $I_0$ qui délivre l'estimation initiale $G_\ell^{(0)}$, puis une estimation d'ordre d représentée par le bloc $I_d$, qui délivre $G_0^{(d)}$, puis une estimation d+1 représenté par le bloc $I_{d+1}$ qui délivre $G_\ell^{(d+1)}$ et enfin une ultime itération d'ordre D représentée par le bloc $I_D$ qui délivre $G_\ell^{(D)}$.

Le récepteur qui vient d'être décrit comprend donc L circuits tels que celui qui est représenté figure 3 sous la référence $14_\ell$. Pour affiner son estimation du canal $G_\ell^{(d)}$, le circuit $14_\ell$ doit donc disposer des probabilités :

$$P\left[A_k = A \middle| \{R_{\ell'}\}_{\ell'=0}^{L-1}, \{G_{\ell'}^{(d)}\}_{\ell'=0}^{L-1}\right]$$

c'est-à-dire de la probabilité que le symbole $A_k$ prenne une valeur parmi toutes les valeurs possibles, compte tenu de $R_\ell$ et $G_\ell$.

Selon l'invention, on a vu qu'on effectuait D+1 itérations, qui permettent de calculer successivement $G^{(0)}$, $G^{(1)}$, ..., $G^{(D)}$. Cependant, un problème se pose pour la première passe (d=0) puisqu'on ne dispose pas encore de $G_\ell$. Il n'est donc pas possible en toute rigueur de calculer les probabilités définies plus haut.

Selon l'invention, on utilise alors les symboles pilotes (ou de référence) pour lesquels les probabilités sont connues. En effet, pour un symbole pilote, la probabilité que $A_k$ prenne la valeur $D_k$ est égale à 1 (et la probabilité que $A_k$ ne prenne pas la valeur $D_k$ est nulle). Pour les autres symboles, on utilise des probabilités équiparties (par exemple, pour un symbole binaire, on prendra ½ et ½ pour les deux valeurs possibles).

Pour les itérations suivantes (d≠0), on dispose des $G_\ell^{(d)}$ (ainsi que des $R_\ell$) à travers la connaissance des $\Lambda_k^{(d)}$ issus de la recombinaison de tous les démodulateurs et dont l'expression est

$$\sum_{\ell=0}^{N-1} R_{\ell k}\left(\sum_{n=0}^{N-1} G_{\ell n}^{(d)*} B_{nk}\right)$$

et l'on pourra donc calculer les probabilités et cela jusqu'à la $(D+1)^{ième}$ itération (d=D).

En toute rigueur, ce processus correspond au cas où les symboles $A_k$ sont des symboles d'information non protégés par un code correcteur, comme il est montré plus loin, (ou éventuellement protégés par un code mais dont on ne veut pas tenir compte par souci de simplicité). Si, au contraire, les $A_k$ sont des symboles protégés par un code correcteur que l'on veut exploiter, on appliquera un algorithme dit de BAHL pour obtenir les probabilités

$$P(A_k = A \left| \{R_\ell\}_{\ell=0}^{L-1}, \{G_\ell\}_{\ell=0}^{L-1} \right.$$

nécessaires à l'itération d+1 à partir de l'itération d. Cet algorithme réalise une opération complexe, qui est, en fait, un processus de démodulation amélioré. L'opération de démodulation effectuée par les démodulateurs $16_0$, ..., $16_\ell$, ..., $16_{L-1}$ n'est donc plus dans la boucle parce qu'une autre opération, plus complexe et plus complète, l'est déjà dans l'itération. Le rebouclage de la sortie de l'additionneur 18 sur les estimateurs n'est alors plus nécessaire.

L'algorithme de BAHL est décrit par L.R. BAHL, J. COCKE, F. JELINEK and J. RAVIV, dans l'article intitulé "Optimal Decoding of Linear Codes for Minimizing Symbol Error Rate", publié dans IEEE Transactions on Information Theory, vol. IT-2°, mars 1974.

Dans le cas particulier d'un codage à répétition, la structure codée peut être immédiatement intégrée dans la formule explicite donnant la (d+1)$^{ième}$ itération évitant ainsi d'avoir recours à l'algorithme de BAHL.

Dans un mode particulier de réalisation, la complexité de l'estimateur de canal peut être réduite, sans perte sensible de performance, en ne retenant dans la représentation du canal que les vecteurs propres correspondant à des valeurs propres importantes.

Dans un autre mode particulier de réalisation, l'expression $G_{\ell n}^{(d+1)}$ peut être simplifiée davantage dans le cas particulier des modulations MDP2, MDP4, ... Pour la modulation MDP2, le symbole $A_k$ d'indice k prend ses valeurs dans l'ensemble $S_k$ comprenant les deux valeurs $+\sqrt{E_k}$ et $-\sqrt{E_k}$ et l'expression générale de $G_{\ell n}^{(d+1)}$ se transforme en

$$G_{\ell n}^{(d+1)} = w_{\ell n}\left(\sum_{\substack{k=0\\k\notin S}}^{N-1} \tanh\left[\frac{1}{I_0}\Re e\left\{\Lambda_k^{(d)}\right\}\right] R_{\ell k} B_{nk} + \sum_{k\in S} D_k^* R_{\ell k} B_{nk}\right)$$

où tanh[.] est la fonction tangente hyperbolique et $\Re e\{.\}$ est la fonction "partie réelle". Les arguments de l'opérateur $\Re e\{.\}$ sont fournis de manière naturelle par le récepteur à chaque itération de l'algorithme d'estimation. A la fin du processus itératif (comme on le verra dans la suite), ces arguments seront directement fournis par le récepteur à un éventuel décodeur utilisant un décodage pondéré en entrée.

La complexité de l'estimateur de canal peut être encore réduite en utilisant l'une des fonctions d'écrétage suivantes :

$$\Phi_0(x) = \begin{cases} x & \text{si} \quad -1 \le x \le 1 \\ \text{signe de } x & \text{ailleurs} \end{cases}$$

ou

$$\Phi_1(x) = \begin{cases} 0 & \text{si} \quad -1/2 \le x \le 1/2 \\ \text{signe de } x & \text{ailleurs} \end{cases}$$

ou

$$\Phi_2(x) = \text{signe de } x$$

à la place de la fonction tangente hyperbolique.

Pour le bon déroulement de toutes les étapes de l'algorithme EM, le récepteur doit disposer d'une borne supérieure $B_D$ de l'étalement Doppler réel et d'une estimation à la fois de la variance du bruit $I_0$ et de la puissance individuelle de chacun des trajets retenus $\phi_\ell(0)$.

Dans le cas où le récepteur dispose d'une banque de vecteurs propres pour différentes valeurs typiques de la borne supérieure de l'étalement Doppler $B_D$, il peut fournir les vecteurs de base adéquats $B_k$ en fonction de la borne supérieure de l'étalement Doppler et donc de la vitesse variable du terminal.

Dans le cas où la borne supérieure de l'étalement Doppler n'est pas mise à jour en fonction de la vitesse réelle du terminal, une valeur unique lui est attribuée et le récepteur ne fournit que les vecteurs de base correspondant.

De même, grâce aux quantités mentionnées précédemment, le récepteur peut calculer et fournir les pondérations nécessaires.

Ayant produit une $D^{ième}$ estimation $G_\ell^{(D)}$, cette ultime estimation est prise comme représentation du canal et cette représentation est notée $\hat{G}_\ell$. Pour chaque symbole de rang k, le démodulateur $16_\ell$ forme le produit de $R_{\ell k}$ par la quantité complexe conjuguée de $C_{\ell k}$, soit $C^*_{\ell k}$, et l'additionneur 18 forme la somme de toutes ces contributions venant des L trajets et délivre un signal final $\Lambda_k^{(D)}$ défini par :

$$\Lambda_k^{(D)} = \sum_{\ell=0}^{L-1} R_{\ell k} G^*_{\ell k}$$

Si l'on exprime les $G^*_{\ell k}$ en fonction des vecteurs de base, on a :

$$\Lambda_k^{(D)} = \sum_{\ell=0}^{L-1} R_{\ell k} \left( \sum_{n=0}^{N-1} \hat{G}^*_{\ell n} B_{nk} \right)$$

Les signaux $\Lambda_k^{(D)}$ peuvent être utilisés par un détecteur/décodeur de Viterbi pour récupérer les symboles inconnus (données) émis durant une période de contrôle de puissance, lorsqu'il y a eu codage pour protéger les données.

Pour la démodulation MDP2, les parties réelles des signaux $\Lambda_k^{(D)}$ suffisent pour le décodage et jouent le rôle de sorties pondérées.

De plus, pour une modulation MDP2 non codée avec symboles inconnus prenant équiprobablement les valeurs $+\sqrt{E_k}$ et $-\sqrt{E_k}$, la décision sur le symbole $A_k$ est donnée simplement par :

$$\hat{A}_k = \text{signe de } \Re e\left\{\Lambda_k^{(D)}\right\}.$$

L'invention qui vient d'être décrite peut être mise en oeuvre quelle que soit la répartition des symboles de référence. Ceux-ci peuvent être groupés ou répartis de manière quelconque. La présente invention peut, en particulier, être mise en oeuvre avec une répartition particulière décrite et revendiquée dans la demande de brevet français déposée par le présent Demandeur le jour même du dépôt de la présente demande et intitulée "Procédés de communications numériques AMRC à répartition des symboles de référence".

Le fonctionnement du récepteur de l'invention a été simulé dans le cadre du service de la voie à 8 kbits/s sur la liaison montante du système AMRC de l'UMTS. Les symboles de données et de contrôle sont multiplexés respectivement sur les composantes en phase (I) et en quadrature (Q) du signal modulé transmis.

Le facteur d'étalement des symboles de contrôle était double de celui des symboles de données. La durée d'une période de contrôle de puissance était de 0,625 ms et contenait $N_D$=20 symboles de données de période $T_D$=31,25 µs et $N_C$=10 symboles de contrôle de période $T_C$=62,5 µs. Les positions temporelles de ces derniers sont données par :

$$p_i = (i + 1/2)\, T_D,\ i = 0, 1, ..., N_D\text{-}1$$

pour les symboles de données et par

$$p_i = (i\text{-}N_D + 1/2)\, T_C,\ i = N_D + 1, ..., N\text{-}1$$

pour les symboles de contrôle. Ces derniers comportaient $N_p$=6 symboles pilotes supposés regroupés au débit de

chaque période de contrôle de puissance. Par ailleurs, la puissance moyenne des symboles de données a été supposée le double de celle des symboles de contrôle. L'énergie moyenne reçue $\bar{E}$ est donc identique pour tous les symboles reçus et vérifie :

$$\bar{E}=\left(\sum_{\ell=0}^{L-1}\phi_{\ell}(0)\right)E_k,\ k=0,1,\ldots,N-1\,.$$

Le terminal est supposé se déplacer à la vitesse de 500 km/h et utiliser une fréquence porteuse de 1,92 Ghz. L'étalement Doppler correspondant à ces choix est de 1,778 kHz. Le canal est supposé posséder L=3 trajets de même puissance moyenne.

Les performances d'un récepteur selon l'invention conformément à ces hypothèses ont été comparées à celles de deux récepteurs classiques utilisés dans les récepteurs AMRC. Le premier utilise l'algorithme d'estimation par moyennage, qui compense la modulation subie par les échantillons reçus correspondant aux symboles pilotes et prend la moyenne de ceux-ci comme estimation du canal multi-trajets. Le second utilise l'algorithme d'estimation linéaire qui compense également la modulation des échantillons des symboles pilotes, mais effectue une interpolation et/ou une extrapolation linéaire du canal selon le critère de l'erreur quadratique moyenne minimum (EQMM).

La comparaison s'effectue à travers l'évolution du taux d'erreur binaire (TEB) brut (sans prise en compte d'un éventuel codage correcteur d'erreurs) pour des symboles pilotes répartis ou groupés en utilisant les trois algorithmes d'estimation de canal proposés (selon l'invention, par moyennage ou par estimation linéaire).

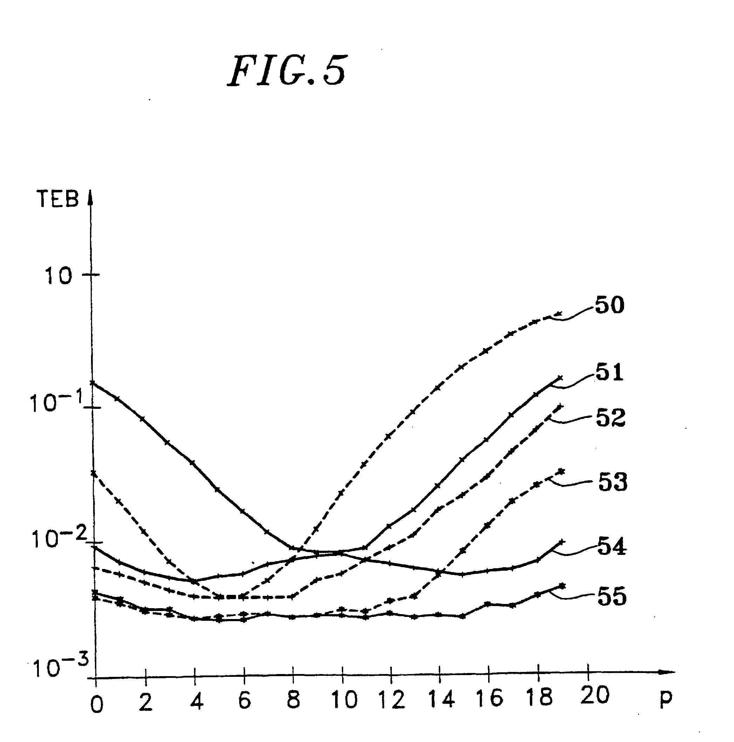

Sur la figure 4, le taux d'erreur binaire est représenté en fonction de $\bar{E}/I_0$ (rapport entre l'énergie moyenne reçue par symbole et le niveau de bruit) et la figure 5, ce même taux en fonction de la position des symboles de données dans une période de contrôle de puissance pour $\bar{E}/I_0$=10 dB. Pour ces deux figures, les références des courbes correspondent aux caractéristiques suivantes :

- 40, 50 : estimation par moyennage, symboles pilotes groupés,
- 41, 51 : estimation par moyennage, symboles pilotes répartis,
- 42, 52 : estimation linéaire, symboles pilotes groupés,
- 43, 53 : estimation selon l'invention, symboles pilotes groupés,
- 44, 54 : estimation linéaire, symboles pilotes répartis,
- 45, 55 : estimation selon l'invention, symboles pilotes répartis,
- 46 : courbe théorique, canal parfaitement connu.

Ces résultats montrent que le récepteur selon l'invention fournit, dans tous les cas, de meilleures performances que les deux autres récepteurs classiques. Les deux courbes les plus proches de la courbe théorique correspondent à l'invention.

A titre d'exemple, pour un TEB brut de $2.10^{-2}$ et des symboles pilotes groupés, le récepteur selon l'invention garantit un gain en $\bar{E}/I_0$ de l'ordre de 3dB par rapport au plus favorable des récepteurs classiques.

## Revendications

1. Récepteur de signaux de radiocommunications de type AMRC, ces signaux ayant été obtenus à partir de symboles à spectre étalé par des séquences pseudoaléatoires, ces signaux s'étant ensuite propagés suivant une pluralité de trajets, ce récepteur comprenant :

   - des moyens ($12_0$, ..., $12_\ell$, ..., $12_{L-1}$) pour restituer, pour chaque symbole, L signaux désétalés correspondant à L trajets différents,
   - des moyens ($14_0$, ..., $14_\ell$, ..., $14_{L-1}$) pour calculer L estimations des L trajets,
   - des moyens de démodulation ($16_0$, ..., $16_\ell$, ..., $16_{L-1}$) pour traiter chacun des L signaux désétalés à l'aide des L estimations correspondantes pour obtenir les contributions des L trajets,
   - un additionneur (18) pour former la somme de ces L contributions et pour délivrer une estimation du symbole reçu,
   - un circuit de décision (20) quant au symbole reçu à partir de la valeur de l'estimation délivrée par l'additionneur,

   ce récepteur étant **caractérisé en ce que** :

a) il traite des blocs de N symboles, chaque bloc comprenant des symboles de données et des symboles de contrôle, chaque symbole étant repéré par le rang k qu'il occupe dans le bloc, k allant de 0 à N-1,
b)pour chaque trajet, repéré par un indice $\ell$, $\ell$ allant de 0 à L-1, et pour chaque bloc, le récepteur considère un vecteur $C_\ell$ à N composantes qui caractérise le trajet durant ce bloc,
c) le récepteur comprend des moyens (30) pour définir une base de vecteurs $B_k$, ces vecteurs étant les N vecteurs propres de la matrice

$$E\left[C_\ell C_\ell^{*T}\right],$$

chaque vecteur $C_\ell$ étant décomposé dans cette base, les coefficients de la décomposition, notés $G_{\ell k}$, constituant des variables aléatoires gaussiennes indépendantes,
d) les coefficients $G_{\ell k}$ définissent, pour chaque trajet $\ell$, un vecteur $G_\ell$ à N composantes, les moyens d'estimation ($14_\ell$) étant aptes à estimer chaque vecteur $G_\ell$ par un processus itératif fondé sur un algorithme d'estimation-maximisation (EM) fondé sur un critère de probabilité a posteriori maximale.

**2.** Récepteur selon la revendication 1, dans lequel :

a) la sortie de l'additionneur (18) est rebouclée sur les moyens d'estimation ($14_\ell$),
b) les moyens d'estimation ($14_\ell$) sont initialement mis en oeuvre ($\Im_0$) en prenant en compte les symboles de contrôle contenus dans le bloc et supposés connus, ce qui permet d'obtenir en sortie de l'additionneur une première estimation pour les symboles de données contenus dans le bloc, lesdits moyens d'estimation ($14_\ell$) prenant en compte, ensuite, (... $\Im_d$, $\Im_{d+1}$, ...) les symboles estimés présents en sortie de l'additionneur et ainsi de suite, les moyens d'estimation délivrant finalement après une dernière itération ( $\Im_D$ ) la valeur quasi-optimale ($G_\ell^{(D)}$) du vecteur $G_\ell$.

**3.** Procédé de réception de signaux de radiocommunications de type AMRC, ces signaux ayant été obtenus à partir de symboles à spectre étalé par des séquences pseudoaléatoires, ces signaux s'étant ensuite propagés suivant une pluralité de trajets, ce procédé de réception comprenant les opérations suivantes :

- pour chaque symbole, on restitue L signaux désétalés correspondant à L trajets différents,
- on calcule L estimations des L trajets,
- on démodule chacun des L signaux désétalés à l'aide des L estimations correspondantes pour obtenir les L contributions des trajets,
- on forme la somme de ces L contributions, ce qui donne une estimation du symbole reçu,
- on prend une décision quant au symbole reçu à partir de la valeur de l'estimation obtenue,

ce procédé étant **caractérisé en ce que** :

a)on traite des blocs de N symboles, chaque bloc comprenant des symboles de données et des symboles de contrôle, chaque symbole étant repéré par le rang k qu'il occupe dans le bloc, k allant de 0 à N-1,
b)pour chaque trajet, repéré par un indice $\ell$, $\ell$ allant de 0 à L-1, et pour chaque bloc, on considère un vecteur $C_\ell$ à N composantes qui caractérise le trajet durant ce bloc,
c)on considère la matrice

$$E\left[C_\ell C_\ell^{*T}\right]$$

qui possède N vecteurs propres notés $B_k$ et l'on prend ces vecteurs propres $B_k$ comme base, on décompose chaque vecteur $C_\ell$ dans cette base, les coefficients de la décomposition, notés $G_{\ell k}$, constituant des variables aléatoires gaussiennes indépendantes,
d)les coefficients $G_{\ell k}$ définissent, pour chaque trajet $\ell$, un vecteur $G_\ell$ à N composantes et l'on estime chaque vecteur $G_\ell$ par un processus itératif fondé sur un algorithme d'estimation-maximisation (EM) fondé sur un critère de probabilité a posteriori maximale.

**4.** Procédé selon la revendication 3, dans lequel le processus itératif est initialement mis en oeuvre en prenant en

compte les symboles de contrôle contenus dans le bloc et supposés connus, ce qui permet d'obtenir une première estimation pour les symboles de données contenus dans le bloc, ledit processus itératif prenant en compte, ensuite, tous les symboles du bloc conformément à cette première estimation, ce qui permet d'obtenir une deuxième estimation des symboles du bloc, et ainsi de suite, jusqu'à l'obtention d'une estimation satisfaisante pour $G_\ell$, que l'on utilise pour la démodulation.

## Patentansprüche

**1.** Empfänger für CDMA-Radiokommunikationssignale, wobei diese Signale ausgehend von Symbolen mit durch Pseudozufallssequenzen verbreitertem Spektrum erhalten wurden, und wobei sich die Signale dann folgend einer Mehrzahl von Bahnen ausbreiten, wobei dieser Empfänger umfasst:

- Mittel ($12_0$, ..., $12_l$, ..., $12_{L-1}$) zum Wiederherstellen von L verschiedenen Bahnen entsprechenden nicht verbreiterten Signalen für jedes Symbol,
- Mittel ($14_0$, ..., $14_l$, ..., $14_{L-1}$) zum Berechnen von L Abschätzungen der L Bahnen,
- Demodulationsmittel ($16_0$, ..., $16_l$, ..., $16_{L-1}$) zum Behandeln jedes der L nicht verbreiterten Signale mit Hilfe der L entsprechenden Abschätzungen zum Erhalten der Beiträge der L Bahnen,
- einen Addierer (18) zum Bilden der Summe dieser L Beiträge und zum Liefern einer Abschätzung des empfangenen Symbols,
- eine Entscheidungsschaltung (20) bezüglich des empfangenen Symbols ausgehend von dem Wert der durch den Addierer gelieferten Abschätzung,

wobei dieser Empfänger **dadurch gekennzeichnet ist, dass**:

a) er Blöcke von N Symbolen behandelt, wobei jeder Block Datensymbole und Steuersymbole umfasst, wobei jedes Symbol durch den Rang k, den es in dem Block einnimmt, aufgefunden wird, wobei k von 0 bis N-1 geht,
b) der Empfänger für jede durch einen Index $\ell$, $\ell$ gehend von 0 bis L-1, auffindbare Bahn und für jeden Block einen Vektor $C_\ell$ mit N Komponenten berücksichtigt, welche die Bahn während dieses Blocks charakterisiert,
c) der Empfänger Mittel (30) zum Definieren einer Basis von Vektoren $B_k$ umfasst, wobei diese Vektoren die N Eigenvektoren der Matrix

$$E[C_\ell C_\ell^{*T}]$$

sind, wobei jeder Vektor $C_\ell$ bezüglich dieser Basis in Komponenten zerlegt ist, wobei die Koeffizienten dieser Zerlegung, genannt $G_{\ell k}$, zufällige unabhängige Gaussvariablen bilden,
d) die Koeffizienten $G_{\ell k}$ für jede Bahn $\ell$ einen Vektor $G_\ell$ mit N Komponenten definieren, wobei die Abschätzungsmittel ($14_\ell$) ausgelegt sind, jeden Vektor $G_\ell$ durch einen auf einem Abschätzungs-Maximierungs (AM) -Algorithmus, welcher auf einem Kriterium der maximalen Wahrscheinlichkeit a posteriori basiert, basierenden iterativen Prozess abzuschätzen.

**2.** Empfänger nach Anspruch 1, bei dem:

a) der Ausgang des Addierers (18) auf die Abschätzmittel ($14_\ell$) zurückgeschleift ist,
b) die Abschätzmittel ($14_\ell$) anfänglich ( $\mathfrak{I}_0$ ) initialisiert sind, indem die in dem Block enthaltenen und als bekannt angenommenen Steuersymbole berücksichtigt werden, was es erlaubt, am Ausgang des Addierers eine erste Abschätzung für die in dem Block enthaltenen Datensymbole zu erhalten, wobei die Abschätzmittel ($14_\ell$) dann (... $\mathfrak{I}_d$, $\mathfrak{I}_{d+1}$, ...) die am Ausgang des Addierers vorliegenden abgeschätzten Symbole berücksichtigen und die Abschätzmittel dann schließlich nach einer letzten Iteration ( $\mathfrak{I}_D$ ) den quasioptimalen Wert ($G_\ell^{(D)}$) des Vektors $G_\ell$ liefern.

**3.** Verfahren zum Empfangen von CDMA-Radiokommunikationssignalen, wobei diese Signale ausgehend von Symbolen mit durch Pseudozufallssequenzen verbreitertem Spektrum erhalten wurden und diese Signale sich dann folgend einer Mehrzahl von Bahnen ausbreiten, wobei dieses Verfahren zum Empfangen die folgenden Schritte umfasst:

- für jedes Symbol L werden nicht verbreiterte Signale entsprechend L verschiedenen Bahnen zurückgewonnen,
- L Abschätzungen der L Bahnen werden berechnet,
- jedes der L nicht verbreiterten Signale wird mit Hilfe der L entsprechenden Abschätzungen demoduliert, um die L Beiträge der Bahnen zu erhalten,
- die Summe dieser L Beiträge wird gebildet, was eine Abschätzung des empfangenen Symbols ergibt,
- ausgehend von dem Wert der erhaltenen Abschätzung wird eine Entscheidung betreffend das empfangene Symbol getroffen,

wobei dieses Verfahren **dadurch gekennzeichnet ist, dass**:

a) Blöcke von N Symbolen behandelt werden, wobei jeder Block Datensymbole und Steuersymbole umfasst, wobei jedes Symbol durch den Rang k auffindbar ist, den es in dem Block einnimmt, wobei k von 0 bis N-1 geht,
b) für jede Bahn, auffindbar durch einen Index $\ell$, wobei $\ell$ von 0 bis L-1 geht, und für jeden Block ein Vektor $C_\ell$ mit N Komponenten, welche die Bahn während dieses Blocks charakterisiert, in Betracht gezogen wird,
c) die Matrix

$$E[C_\ell C_\ell^{*T}],$$

welche N $B_k$ genannte Eigenvektoren besitzt, betrachtet wird, und dass diese Eigenvektoren $B_k$ als Basis verwendet werden, jeder Vektor $C_\ell$ bezüglich dieser Basis in Komponenten zerlegt wird, wobei die $G_{\ell k}$ genannten Koeffizienten der Zerlegung zufällige unabhängige Gaussche Variablen darstellen,
d) die Koeffizienten $G_{\ell k}$ für jede Bahn $\ell$ einen Vektor $G_\ell$ mit N Komponenten definieren und jeder Vektor $G_\ell$ durch einen auf einen Abschätzungs-Maximierungs(AM)-Algorithmus, welcher auf einem Kriterium der maximalen Wahrscheinlichkeit a posteriori basiert, basierenden iterativen Algorithmus abgeschätzt wird.

**4.** Verfahren nach Anspruch 3, bei dem der iterative Prozess anfänglich initialisiert wird, indem die in dem Block enthaltenen und als bekannt angenommenen Steuersymbole berücksichtigt werden, was es erlaubt, eine erste Abschätzung für die in dem Block enthaltenen Datensymbole zu erhalten, wobei der iterative Prozess dann alle Symbole des Blocks entsprechend dieser ersten Abschätzung berücksichtigt, was es erlaubt, eine zweite Abschätzung der Symbole des Blocks zu erhalten, usw., bis zum Erhalten einer befriedigenden Abschätzung für $G_\ell$, welche für die Demodulierung benutzt wird.

## Claims

**1.** CDMA type radiocommunication signals receiver, these signals having been obtained from spectrum symbols spread using pseudo-random sequences, these signal then having been propagated along a number of paths, this receiver comprising:

- means ($12_0$, ..., $12_\ell$, ..., $12_{L-1}$) of restoring L unspread signals for each symbol, corresponding to L different paths,
- means ($14_0$, ..., $14_\ell$, ..., $14_{L-1}$) of calculating L estimates of the L paths,
- demodulation means ($16_0$, ..., $16_\ell$, ..., $16_{L-1}$) for processing each of the L unspread signals using the L corresponding estimates to obtain L path contributions,
- an adder (18) to form the sum of these L contributions and to output an estimate of the received symbol,
- a decision circuit (20) about the received symbol starting from the value of the estimate output by the adder,

this receiver being **characterized in that**:

a) it processes blocks of N symbols, each block comprising data symbols and control symbols, each symbol being identified by the rank k that it occupies in the block, where k varies from 0 to N-1,
b) for each path identified by an index $\ell$, where $\ell$ varies from 0 to L-1, and for each block, the receiver considers a vector $C_\ell$ with N components that characterizes the path during this block,
c) the receiver comprises means (30) of defining a vector base $B_k$, these vectors being N eigenvectors of the matrix $E[C_\ell C_\ell^{*T}]$, each vector $C_?$ being decomposed in this base, the decomposition coefficients denoted $G_{?k}$ forming independent random Gaussian variables,
d) coefficients $G_{?k}$, defining a vector $G_\ell$ with N components for each path $\ell$, the estimating means ($14_?$) being

capable of estimating each vector $G_\ell$, using an iterative process based on EM estimation-maximization algorithm based on a maximum a posteriori probability criterion.

**2.** Receiver according to claim 1, in which:

a) the output from adder (18) is looped back onto estimating means ($14_\ell$),
b) the estimating means ($14_\ell$) are initially used ($\Im_0$) based on control symbols contained in the block and assumed to be known, which gives a first estimate for data symbols contained in the block at the output from the adder, the said estimating means ($14\ell$) then using (... $\Im_d$, $\Im_{d+1}$ ,...) the estimated symbols present at the output from the adder and so on, the estimating means finally outputting the quasi-optimal value ($G_\ell^{(D)}$) of the vector $G_\ell$, after a final iteration ( $\Im_D$ ).

**3.** Process for reception of CDMA type of radiocommunication signals, these signals having been obtained from spectrum symbols spread using pseudo-random sequences, these signals then having been propagated along a number of paths, this reception process comprising the following operations:

- for each symbol, L unspread signals corresponding to L different paths are restored,
- L estimates of the L paths are calculated,
- each of the L unspread signals is demodulated using the L corresponding estimates to obtain the L contributions of the paths,
- the sum of these L contributions is formed, which gives an estimate of the received symbol,
- a decision is made about the received symbol, based on the value of the estimate obtained,

this process being **characterized in that**:

a) blocks of N symbols are processed, each block comprising data symbols and control symbols, each symbol being identified by rank k that it occupies within the block, where k varies from 0 to N-1,
b) for each path, identified by an index $\ell$ where $\ell$ varies from 0 to L-1, and for each block, a vector $C_\ell$ with N components is considered, which characterizes the path during this block,
c) the matrix $E[C_\ell C_\ell^{*T}]$ which has N eigenvectors denoted $B_k$ is considered, and these N eigenvectors $B_k$ are used as a base, each vector $C_\ell$ in this base is decomposed, the decomposition coefficients denoted as $G_{\ell k}$ forming independent Gaussian random variables,
d) the coefficients $G_{\ell k}$ defining a vector $G_\ell$ with N components for each path $\ell$, and each vector $G_\ell$ is estimated using an iterative process based on an estimation-maximization (EM) algorithm based on a maximum a posteriori probability criterion.

**4.** Process according to claim 3, in which the iterative process is used initially taking account of the control symbols contained in the block and assumed to be known, which gives a first estimate for data symbols contained in the block, the said iterative process then taking account of all symbols in the block according to this first estimate, which can give a second estimate of the symbols in the block, and so on, until a satisfactory estimate is obtained for values of $G_\ell$, that are used for the demodulation.

FIG. 1

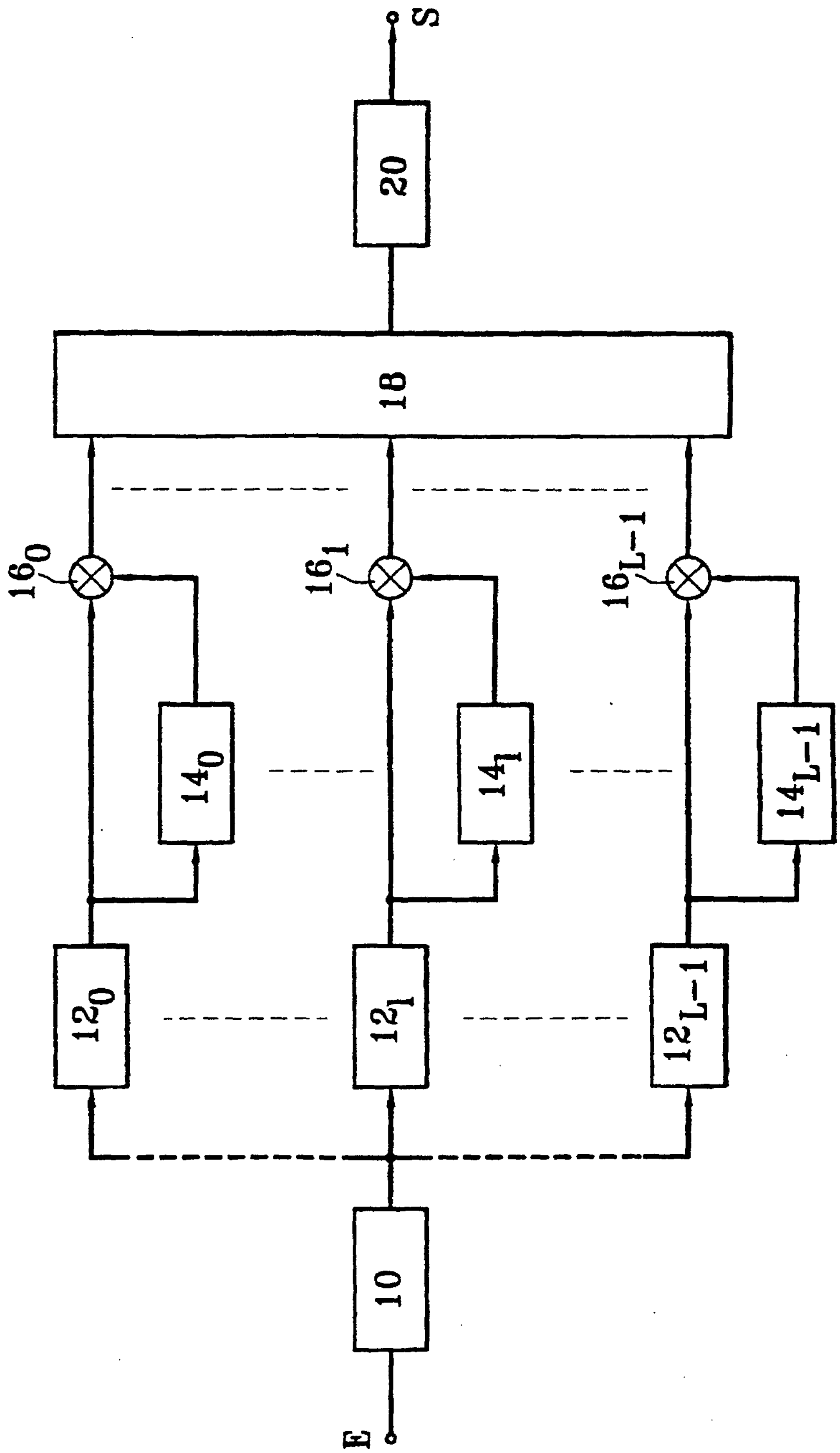

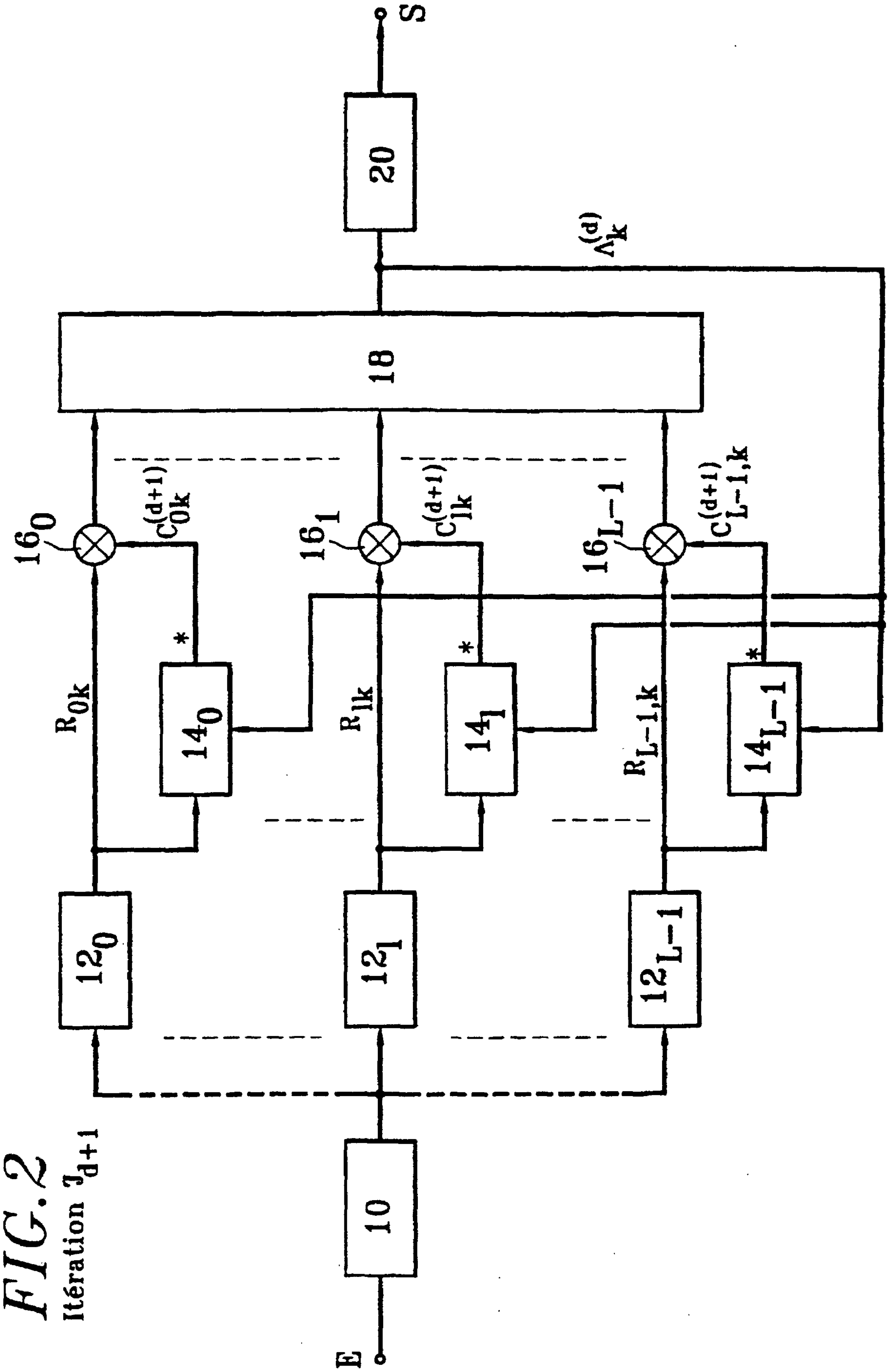


*FIG. 2*
Itération $J_{d+1}$

FIG.3

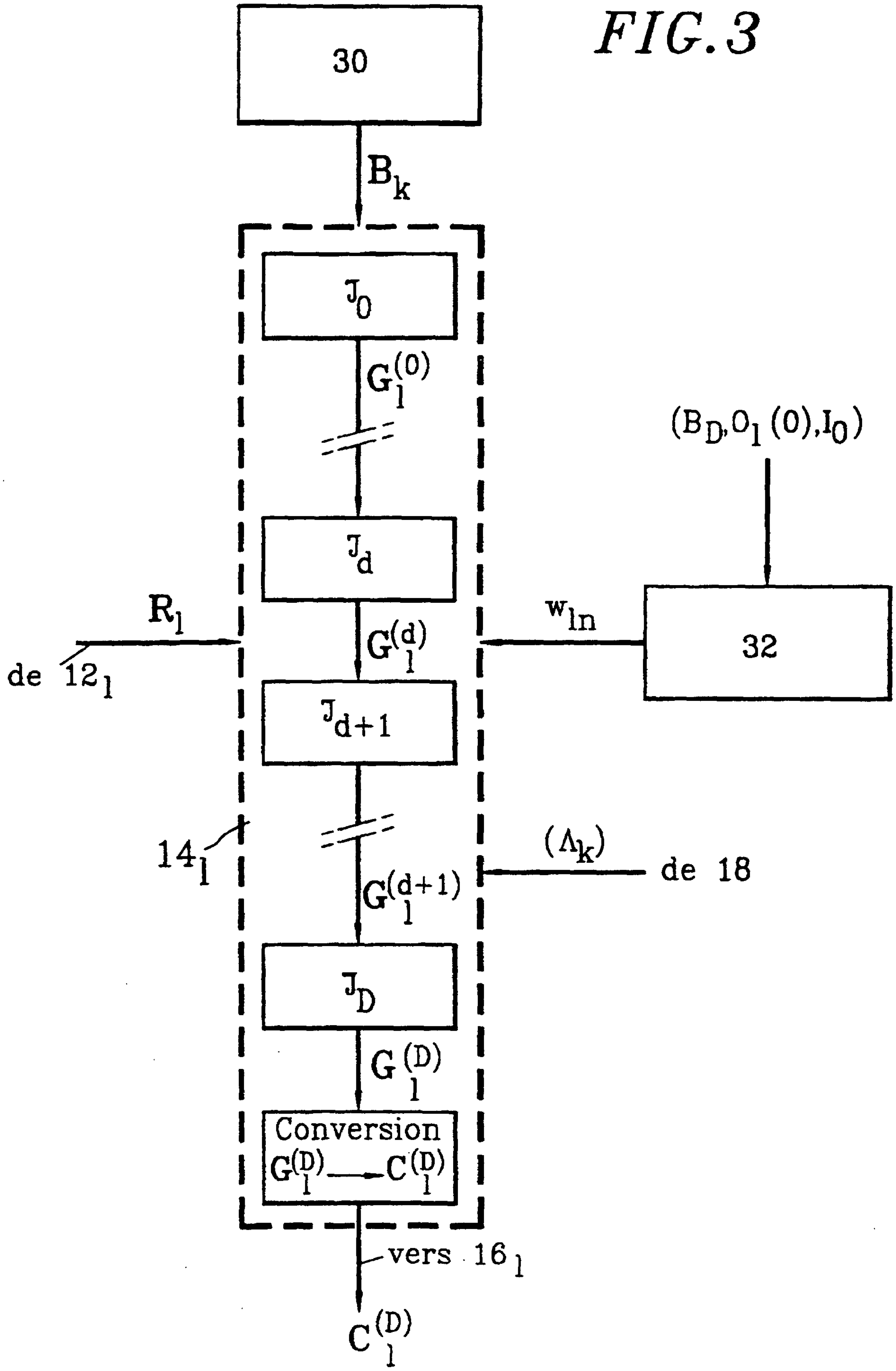
30
$B_k$
$J_0$
$G_l^{(0)}$
$(B_D, O_l(0), I_0)$
$J_d$
$R_l$
$w_{ln}$
32
de $12_l$
$G_l^{(d)}$
$J_{d+1}$
$14_l$
$(\Lambda_k)$
de 18
$G_l^{(d+1)}$
$J_D$
$G_l^{(D)}$
Conversion
$G_l^{(D)} \rightarrow C_l^{(D)}$
vers $16_l$
$C_l^{(D)}$

FIG. 4

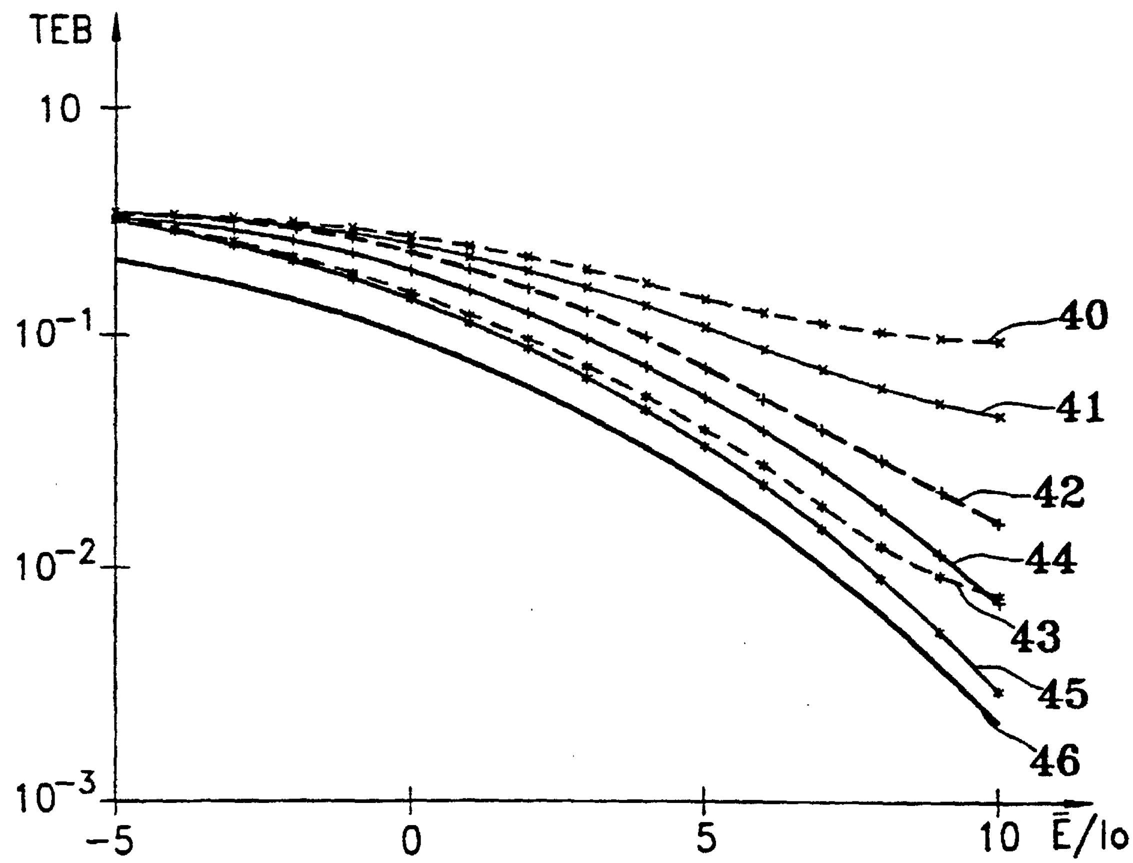

FIG.5